# EUROPÄISCHE PATENTSCHRIFT

(11) **EP 0 751 971 B1**
(45) Veröffentlichungstag und Bekanntmachung des Hinweises auf die Patenterteilung: **28.03.2001**
(21) Anmeldenummer: 96900313.6
(22) Anmeldetag: 11.01.1996
(51) Int. Cl.: C08G 69/40, C08G 18/10

(54) **VERFAHREN ZUR HERSTELLUNG VON FORMTEILEN MITTELS POLYMERISATION VON LACTAMEN IN FORMEN**
METHOD OF MANUFACTURING MOULDED PARTS BY POLYMERISATION OF LACTAMS IN MOULDS
PROCEDE DE PRODUCTION DE PIECES MOULEES PAR POLYMERISATION DE LACTAMES DANS DES MOULES

(30) Priorität: 20.01.1995 DE 19501646
(43) Veröffentlichungstag der Anmeldung: 08.01.1997
(73) Patentinhaber: Schwartz GmbH, 46509 Xanten/Ndrh. (DE)
(72) Erfinder: NUSSDORFER, Bernd, D-47608 Geldern (DE)
(74) Vertreter: Stenger, Watzke & Ring Patentanwälte
(86) Internationale Anmeldenummer: EP9600094
(87) Internationale Veröffentlichungsnummer: WO9622322

(56) Entgegenhaltungen:
- EP-A- 0 167 908
- DE-A- 3 704 822

## Beschreibung

Die vorliegende Erfindung betrifft ein Verfahren zur Herstellung von Formteilen mittels Polymerisation von Lactamen in Formen, wobei die Schmelze wenigstens einen Katalysator, wenigstens einen Aktivator und amino-terminierte Polyether enthält. Die Erfindung betrifft weiterhin neuartige, nach dem erfindungsgemäßen Verfahren hergestellte Formteile.

Die technische Herstellung von Formteilen aus Lactamen, vorzugsweise durch die aktivierte alkalische Schnellpolymerisation oder Blockpolymerisation wird seit etwa 30 Jahren angewandt. Unter Formteilen sind im Sinne der vorliegenden Erfindung mittels der bekannten Gieß- und Polymerisationstechniken herstellbaren Elemente, zu denen Halbzeuge, Formelemente, Rohre, Platten und dergleichen gehören, zu verstehen.

Formteile aus Lactamen werden durch die Polymerisation von Lactamen in Gießformen hergestellt und sind gegenüber herkömmlichen Kunststoffelementen beispielsweise auch aus Polyamid im allgemeinen härter, steifer und abriebfester. Dies liegt in erster Linie an der höheren Kristalinität. Durch die Festlegung der verfahrensseitigen Randbedingungen wie Temperatur, Verfallzeit und so weiter, sowie durch die Wahl der zu verwendenden Additive und der Nachbehandlung können die jeweiligen technologischen Eigenschaften der Formteile beeinflußt werden. Die meisten dieser genannten Bedingungen sind allerdings nur mit sehr großem wirtschaftlichen und technischen Aufwand einhaltbar. Die hohe Kristalinität bewirkt vor allem, daß die aus Lactamen hergestellten Formteile auch eine hohe Sprödigkeit aufweisen.

Insbesondere bei tiefen Temperaturen neigen Polyamide im allgemeinen zum Sprödbruch und sind kerbempfindlich. Dies gilt insbesondere auch für die durch aktivierte anionische Polymerisation von Lactamen hergestellten Polyamide. Diese technologische Schwäche behindert den Einsatz von Formteilen aus Polyamid in Kältezonen oder in Bereichen mit großen Temperaturschwankungen. Dies gilt insbesondere für Rollen, Zahnräder und Stützelemente. Aus der EP-A-0 167 908 ist es bekannt, zur Verbesserung der Schlagzähigkeit von Polyamiden auch bei tiefen Temperaturen bei der Herstellung amino-terminierte Polyether einzusetzen. Damit konnten gute Schlagzähigkeits- und Kerbschlagzähigkeitswerte bei Temperaturen von 0 bis -40°C durch die Bildung von Polyamid-Blockcopolymeren erreicht werden. Die EP-A-0 167 908 offenbarr eine Anzahl von Rezepturen, die jedoch zur Herstellung hochbelasteter Formteile mittels Polymerisation von Lactamen in Formen für den Einsatz in Zonen mit Temperaturen unter -40°C oder Zonen mit großen Temperaturschwankungen auch in den positiven Temperaturbereich nicht ausreichen. Insbesondere enthält der einschlägige Stand der Technik keinen Hinweis darauf, inwieweit die genannten technologischen Eigenschaften bei Tieftemperaturen beeinflußbar bzw. erreichbar sind.

Davon ausgehend liegt der vorliegenden Erfindung die **Aufgabe** zugrunde, ein Verfahren zur Herstellung von Formteilen mittels Polymerisation von Lactamen in Formen der gattungsgemäßen Art dahingehend zu verbessern, daß Formteile für den Einsatz innerhalb großer Temperaturbereiche erhalten werden, die insgesamt gute technologische Eigenschaften aufweisen.

Zur technischen **Lösung** dieser Aufgabe wird mit der Erfindung vorgeschlagen, daß als Katalysator Natriumlactamat in Mengen von 2,9 bis 3,8 Gew.-% verwendet wird.

Die sich nach der Erfindung ergebene Schmelze umfaßt übliche Aktivatoren in üblichen Mengenanteilen, amino-terminierte Polyether und Natriumlactamat in dem angegebenen Mengenbereich. Die nach diesem Verfahren hergestellten Formteile, beispielsweise Abstützplatten von Mobilkranen, weisen sehr gute technologische Eigenschaften auf, die in Temperaturbereichen von -50°C bis + 80°C erhalten bleiben. Dazu gehören hohe Zugfestigkeiten, E-Module, ausreichende Steifigkeiten und hohe Druckfestigkeiten. Selbst bei einer Flächenpressung von ca. 65 N/mm², kann das Formteil noch mit hohen Biegemomenten belastet werden.

Die amino-terminierten Polyether werden in bevorzugter Weise in Mengen von 10 bis 26 Gew.-% eingesetzt. Der Aktivator, üblicherweise Polyisocyanate, wird vorzugsweise in Mengen von 2 bis 4 Gew.-% verwendet.

Die angegebenen Bereiche erlauben Rezepturen für die Polymerisationsschmelze, mit welchen die Formteile mit den gewünschten technologischen Eigenschaften erzielbar sind.

In vorteilhafter Weise wird vorgeschlagen, daß die Temperatur der Schmelze auf 90°C bis 160°C, vorzugsweise 100°C bis 110°C eingestellt wird. Weiterhin wird mit Vorteil vorgeschlagen, daß die Temperatur der Form mit 120°C bis 200°C, vorzugsweise 145°C bis 190°C eingestellt wird.

In vorteilhafter Weise kann weiterhin ein Kristallisationsbeschleuniger, vorzugsweise in einer Menge von 1 Gew.-%, beigefügt werden. Ein derartiger Zusatz kann als Keimbildner bei der Polymerisation als Homogenisierer wirken und somit einen besonderen Beitrag zur Verbesserung der Tieftemperat.ureigenschaften eines Polyamidbauteils leisten.

Das erfindungsgemäße Verfahren erlaubt die Herstellung von Formteilen mittels Polymerisation von Lactamen in Formen, die auch bei tiefen Temperaturen eine hohe Schlagzähigkeit und eine hohe Kerbschlagzähigkeit aufweisen. Darüber hinaus bleiben die üblichen guten technologischen Eigenschaften von Polyamiden erhalten.

Entsprechende Formteile wurden durch die beispielsweise Anwendung des erfindungsgemäßen Verfahrens erhalten.

Dabei wurden folgende Werte für die Herstellung von Ofenteilen eingestellt:

### Beispiel 1:

| | |
|---|---|
| Katalysator | 2.9 % |
| Aktivator | 2.5 % |
| amino-terminierter Polyether | 10 % |
| Kristallisationsbeschleuniger | 1.0 % |
| Schmelztemperatur | 100-105°C |
| Formtemperatur | 175-180°C |

### Beispiel 2:

| | |
|---|---|
| Katalysator | 3.5 % |
| Aktivator | 3.0 % |
| amino-terminierter Polyether | 15 % |
| Kristallisationsbeschleuniger | 1.0 % |
| Schmelztemperatur | 103-106°C |
| Formtemperatur | 180-185°C |

### Beispiel 3:

| | |
|---|---|
| Katalysator | 3.5 % |
| Aktivator | 3.0 % |
| amino-terminierter Polyether | 17.5 % |
| Kristallisationsbeschleuniger | 1.0 % |
| Schmelztemperatur | 106-110°C |
| Formtemperatur | 180-188°C |

Folgende Werte wurden für die Herstellung von Stützfüßen eingestellt, wobei entweder ein steigender Guß angewendet oder Kippformen eingesetzt wurden:

### Beispiel 4:

| | |
|---|---|
| Katalysator | 3.8 % |
| Aktivator | 3.5 % |
| amino-terminierter Polyether | 26 % |
| Kristallisationsbeschleuniger | 1.0 % |
| Schmelztemperatur | 104-106°C |
| Formtemperatur | 152-155°C |

### Beispiel 5:

| | |
|---|---|
| Katalysator | 3.5 % |
| Aktivator | 3.0 % |
| amino-terminierter Polyether | 17.5 % |
| Kristallisationsbeschleuniger | 1.0 % |
| Schmelztemperatur | 101-103°C |
| Formtemperatur | 145-155°C |

Für die Herstellung von Schleuderrohren wurden folgende Werte eingestellt:

### Beispiel 6:

| | |
|---|---|
| Katalysator | 3.8 % |
| Aktivator | 3.5 % |
| amino-terminierter Polyether | 20 % |
| Kristallisationsbeschleuniger | 1.0 % |
| Schmelztemperatur | 103-108°C |
| Formtemperatur | 180-190°C |

Besonders hervorragende Werte ergeben sich bei dem Einsatz von amino-terminierten Polyethern in einer Menge von 26 Gew.-%.

Durch eine anschließende Nachtemperung der Teile bei Temperaturen oberhalb 120 °C, welche direkt nach Entnahme der Formteile aus den Formen erfolgt, wird die benötigte Kristallinität erzielt.

## Patentansprüche

1. Verfahren zur Herstellung von Formteilen mittels Polymerisation von Lactamen in Formen, wobei in der Schmelze wenigstens ein Katalysator, wenigstens ein Aktivator und amino-terminierte Polyether enthalten sind,
**dadurch gekennzeichnet,**
daß als Katalysator Natriumlactamat in Mengen von 2,9 bis 3,8 Gew.-% verwendet wird.

2. Verfahren nach einem der vorhergehenden Ansprüche, dadurch gekennzeichnet, daß amino-terminierte Polyether in Mengen von 10 bis 26 Gew.-% verwendet werden.

3. Verfahren nach einem der vorhergehenden Ansprüche, dadurch gekennzeichnet, daß der wenigstens eine Aktivator in Mengen von 2 bis 4 Gew.-% eingesetzt wird.

4. Verfahren nach einem der vorhergehenden Ansprüche, dadurch gekennzeichnet, daß die Temperatur der Schmelze auf 90°C bis 160°C, vorzugsweise 100°C bis 110°C eingestellt wird.

5. Verfahren nach einem der vorhergehenden Ansprüche, dadurch gekennzeichnet, daß die Temperatur der Form auf 120°C bis 200°C, vorzugsweise 145°C bis 190°C eingestellt wird.

6. Verfahren nach einem der vorhergehenden Ansprüche, dadurch gekennzeichnet, daß ein Kristallisationszusatz in einer Menge von vorzugsweise 1 % eingesetzt wird.

7. Formteil aus polymerisierten Lactamen, hergestellt nach dem Verfahren nach wenigstens einem der Ansprüche 1 bis 6.

## Claims

1. Method for manufacturing shaped parts by polymerization of lactams in moulds, the melt comprising at least one catalyst, at least one activator and amino-terminated polyethers, characterized in that sodium lactamate is used as the catalyst in amounts of from 2.9 to 3.8% by weight.

2. Method according to Claim 1, characterized in that amino-terminated polyethers are used in amounts of from 10 to 26% by weight.

3. Method according to either of the preceding claims, characterized in that the at least one activator is used in amounts of from 2 to 4% by weight.

4. Method according to any of the preceding claims, characterized in that the temperature of the melt is adjusted to from 90°C to 160°C, preferably 100°C to 110°C.

5. Method according to any of the preceding claims, characterized in that the temperature of the mould is adjusted to from 120°C to 200°C, preferably 145°C to 190°C.

6. Method according to any of the preceding claims, characterized in that a crystallization additive is used in an amount of preferably 1%.

7. Shaped part comprising polymerized lactams, prepared by the method according to at least one of Claims 1 to 6.

## Revendications

1. Procédé pour la fabrication de pièces moulées par polymérisation de lactames dans des moules, dans la matière en fusion étant contenu au moins un catalyseur, au moins un activateur et des polyéthers amino-terminaux, caractérisé en ce qu'on emploie comme catalyseur du lactamate de sodium dans des proportions de 2,9 à 3,8 % en poids.

2. Procédé selon une des revendications précédentes, caractérisé en ce que des polyéthers amino-terminaux sont employés dans des proportions de 10 à 26 % en poids.

3. Procédé selon une des revendications précédentes, caractérisé en ce que l'activateur, au nombre d'au moins un, est mis en oeuvre dans des proportions de 2 à 4 % en poids.

4. Procédé selon une des revendications précédentes, caractérisé en ce que la température de la matière en fusion est réglée sur 90 °C à 160 °C, de préférence de 100 °C à 110 °C.

5. Procédé selon une des revendications précédentes, caractérisé en ce que la température du moule est réglée sur 120 °C à 200 °C, de préférence sur 145 °C à 190 °C.

6. Procédé selon une des revendications précédentes, caractérisé en ce qu'un additif de cristallisation est mis en oeuvre dans une proportion, de préférence, de 1 %.

7. Pièce moulée en lactames polymérisés, fabriquée conformément au procédé selon au moins une des revendications 1 à 6.
